# EUROPÄISCHE PATENTSCHRIFT

(11) **EP 1 157 227 B1**
(45) Veröffentlichungstag und Bekanntmachung des Hinweises auf die Patenterteilung: **20.11.2002**
(21) Anmeldenummer: 00910698.0
(22) Anmeldetag: 24.02.2000
(51) Int. Cl.: F16H 63/30, F16D 25/12

(54) **STUFENAUTOMATGETRIEBE**
CONTINUOUSLY VARIABLE AUTOMATIC TRANSMISSION
TRANSMISSION AUTOMATIQUE CONTINUE

(30) Priorität: 01.03.1999 DE 19908840
(43) Veröffentlichungstag der Anmeldung: 28.11.2001
(73) Patentinhaber: ZF FRIEDRICHSHAFEN Aktiengesellschaft, 88038 Friedrichshafen (DE)
(72) Erfinder: THORENZ, Frank, D-88677 Markdorf (DE)
(74) Vertreter: Zietlow, Karl-Peter
(86) Internationale Anmeldenummer: EP0001506
(87) Internationale Veröffentlichungsnummer: WO00052362

(56) Entgegenhaltungen:
- DE-A- 3 149 880
- DE-A- 19 800 490
- DE-C- 4 136 040
- US-A- 5 706 694

## Beschreibung

Die vorliegende Erfindung betrifft ein Stufenautomatgetriebe für Kraftfahrzeuge, mit einer Vielzahl von Kupplungen und Bremsen, die als naßlaufende Lamellenpakete ausgebildet sind, nach dem Oberbegriff des Anspruchs 1.

Stufenautomatgetriebe für Kraftfahrzeuge sind vielfältig bekannt. So beschreibt die EP B 434 525 ein automatisches Getriebe für Kraftfahrzeuge, welches Planetensätze aufweist, die mittels Kupplungen und Bremsen geschaltet werden und mit einem mit einer Überbrückungskupplung versehenen hydraulischen Drehmomentwandler verbunden sind. Dieses Automatgetriebe weist eine Antriebswelle und eine Abtriebswelle auf, mit einem doppelten Planetensatz, mindestens einem Leistungsweg zwischen der Antriebswelle und dem doppelten Planetensatz sowie drei Kupplungen und zwei Bremsen, deren selektives paarweises Eingreifen verschiedene Übersetzungsverhältnisse zwischen der Antriebswelle und der Abtriebswelle bestimmt. Durch diese drei Kupplungen und zwei Bremsen können sechs Vorwärtsgänge und ein Rückwärtsgang erzielt werden.

Bei einer Vielzahl von Stufenautomatgetrieben sind zumindest die Kupplungen als naßlaufende Lamellenkupplungen ausgebildet, die durch einen Ölstrom gekühlt werden. Das Öl wird dabei meist von innen nach außen durch das Lamellenpaket geführt, wobei der innere Lamellenträger sich während des Betriebes dreht, um das Öl in radialer Richtung durch das Lamellenpaket zu pressen. Ist dies nicht der Fall, so wird das Lamellenpaket nicht mehr über die gesamte Belagfläche gekühlt.

Bei manchen Getrieben gibt es einen Betriebszustand, nämlich die Standabkopplung, bei dem sich der äußere Lamellenträger mit seinem Lamellensatz dreht, während der innere Lamellenträger mit seinem Lamellensatz feststeht. Das zentral über die Hohlwelle zugeführte Kühlöl wird daher nicht von innen nach außen durch das Lamellenpaket geschleudert, sodass eine unzureichende Kühlung entsteht.

Aufgabe der Erfindung ist es, ein Stufenautomatgetriebe mit naßlaufenden Lamellenkupplungen dahingehend auszugestalten, daß auch im Betriebszustand der Standabkopplung mit stehendem inneren Lamellenträger und sich drehendem äußeren Lamellenträger eine ausreichende Kühlung des Lamellenpaketes erfolgt.

Ausgehend von einem Stufenautomatgetriebe der eingangs näher genannten Art erfolgt die Lösung dieser Aufgabe mit den im kennzeichnenden Teil des Anspruchs 1 angegebenen Merkmalen; eine vorteilhafte Ausgestaltung ist im Unteranspruch beschrieben.

Gemäß der Erfindung wird also vorgeschlagen, daß derjenigen Kupplung, die im Betriebszustand Standabkopplung den feststehenden inneren Lamellenträger und den sich drehenden äußeren Lamellenträger aufweist, ein Schleudertopf zugeordnet ist, der in dem vom inneren Lamellenträger umschlossenen Raum koaxial zur Hohlwelle angeordnet ist, durch welche das Kühlöl der Kupplung zugeführt wird und daß dieser Schleudertopf mit einem sich ständig drehendem Bauteil der Kupplung verbunden ist. Die Außenwand des Schieudertopfes ist dabei mit Bohrungen versehen, die ein radiales Austreten des aufgefangenen Öls in Richtung des Lamellenpaketes ermöglichen. Das sich drehende Bauteil, mit dem der Schleudertopf verbunden ist, ist vorteilhafterweise die zugehörige Kupplungsstauscheibe.

Das durch die Hohlwelle austretende Kühlöl wird also mit diesem Schleudertopf aufgefangen, wobei das gesammelte Öl durch Rotation zu einer rotierenden Ölsäule ausgebildet wird, wodurch sich an der Innenseite der Außenwand des Schleudertopfes ein Rotationsdruck ausbildet; durch die vorgesehenen Bohrungen in der Außenwand des Schleudertopfes wird das Öl dann von innen gegen das Lamellenpaket gespritzt, sodass dieses nun wesentlich effektiver gekühlt werden kann.

Im folgenden wird die Erfindung anhand der Zeichnung näher erläutert, in der ein vorteilhaftes Ausführungsbeispiel dargestellt ist.
Es zeigen:
- Fig. 1: einen Teilschnitt durch ein Stufenautomatgetriebe, mit dem erfindungsgemäßen Schleudertopf und
- Fig. 2a und 2b: einen Schnitt bzw. eine Draufsicht auf den Schleudertopf.

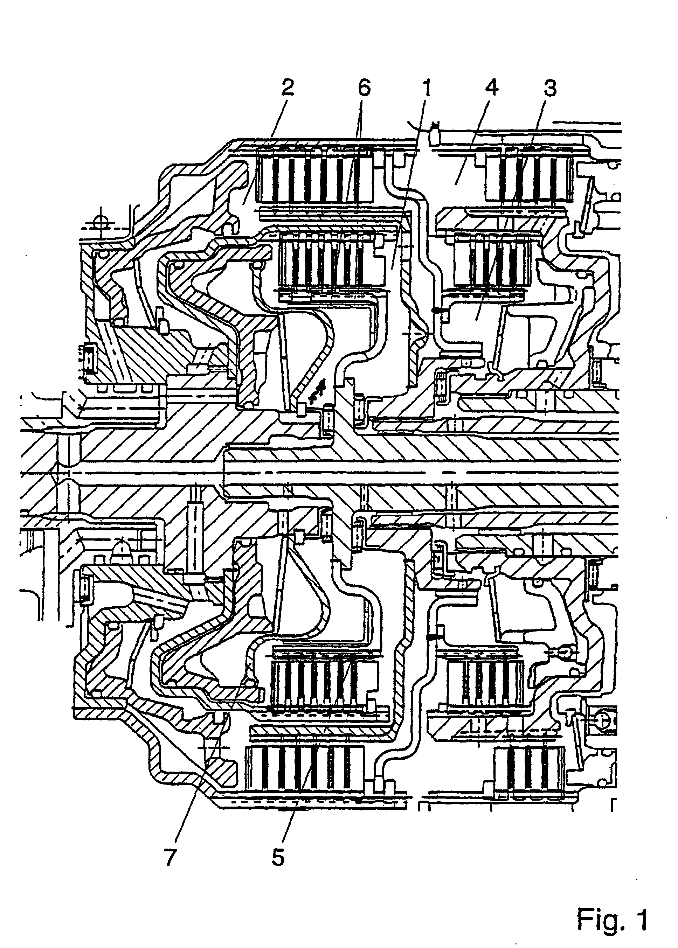

Da Stufenautomatgetriebe dem Fachmann geläufig sind, sind in der beigefügten Fig. 1 nur die für das Verständnis der Erfindung wesentlichen Bauteile mit Bezugszeichen versehen. Dieser Teilschnitt zeigt, daß in dem Stufenautomatgetriebe mehrere naßlaufende Lamellenkupplungen bzw. Bremsen vorgesehen sind, die mit den Bezugszeichen 1 bis 4 versehen sind. Im Betriebszustand der Standabkopplung tritt nun bei der mit 1 bezeichneten Kupplung derjenige Fall ein, bei dem sich der zur Kupplung gehörende äußere Lamellenträger mit seinem Lamellensatz dreht, während der innere Lamellenträger dieser Kupplung mit seinem Lamellensatz feststeht. Das in Richtung des Pfeiles f der Kupplung zugeführte von der Hohlwelle des Getriebes stammende Kühlöl kühlt in diesem Betriebszustand nicht mehr das Lamellenpaket über seine gesamte Belagfläche.

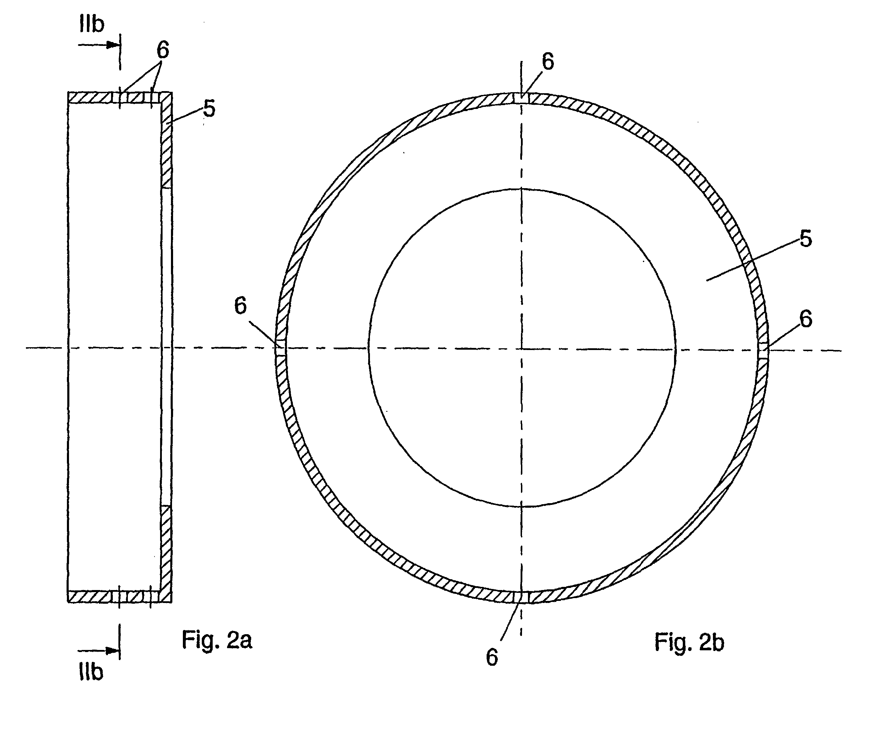

Erfindungsgemäß ist nun der Kupplung ein Schleudertopf 5 zugeordnet, der in dem vom inneren Lamellenträger umschlossenen Raum angeordnet ist und der mit einem sich ständig drehenden Bauteil, in diesem Fall der zugehörigen Kupplungsstauscheibe 7, fest verbunden ist und der das in Richtung des Pfeiles f eintretende Kühlöl auffängt. Damit nun das Lamellenpaket gekühlt wird, ist die zylindrische Außenwand des Schleudertopfes 5 mit einer Vielzahl von Bohrungen 6 (Fig. 2a und 2b) versehen, durch die das durch Rotation des Schleudertopfes 5 zu einer rotierenden ölsäule ausgebildete Kühlöl gegen das Lamellenpaket gespritzt wird, um dieses trotz feststehenden inneren Lamellenträgers zu kühlen.

## Patentansprüche

1. Stufenautomatgetriebe für Kraftfahrzeuge, mit einer Vielzahl von Kupplungen und Bremsen, wobei wenigstens ein Teil der Kupplungen als naßlaufende Lamellenkupplungen ausgebildet ist, mit inneren und äußeren Lamellenträgern, die jeweils mit einem Lamellensatz versehen sind, wobei der Lamellensatz eines inneren Lamellenträgers zusammen mit einem zugeordneten Lamellensatz des äußeren Lamellenträgers eine Kupplung bzw. eine Bremse bilden und sich im allgemeinen die inneren Lamellenträger drehen und die äußeren Lamellenträger feststehen, in einem bestimmten Betriebszustand jedoch ein innerer Lamellenträger einer Kupplung feststeht und sich der dazugehörige äußere Lamellenträger dreht, **dadurch gekennzeichnet, daß** derjenigen Kupplung (A), die im Betriebszustand der Standabkopplung den feststehenden inneren Lamellenträger und den sich drehenden äußeren Lamellenträger aufweist, ein Schleudertopf (5) zugeordnet ist, der in dem vom inneren Lamellenträger umschlossenen Raum koaxial zur Hohlwelle angeordnet ist und der mit einem sich ständig drehendem Bauteil (7) der Kupplung (A) fest verbunden ist, und daß die zylindrische Außenwand des Schleudertopfes (5) mit Bohrungen (6) versehen ist, durch die das durch Rotation des Schleudertopfes (5) zu einer rotierenden Ölsäule ausgebildete Kühlöl. gegen das Lamellenpaket gespritzt wird, um dieses trotz des feststehenden inneren Lamellenträgers zu kühlen.

2. Stufenautomatgetriebe nach Anspruch 1, **dadurch gekennzeichnet, daß** das sich ständig drehende Teil der Kupplung (A) die Kupplungsstauscheibe (7) ist.

## Claims

1. The invention relates to a multi-ratio automatic transmission comprising a plurality of clutches and brakes, with at least some of the clutches being wet multi-disk clutches with inner and outer disk carriers, each equipped with a set of disks, with the disk set of one inner disk carrier forming a clutch or brake together with an assigned disk set of the outer disk carrier and, as a rule, with the inner disk sets rotating and the outer disk sets fixed; however, in a certain operating condition, one inner disk carrier of a clutch is fixed and the mating outer disk carrier rotates, **characterized**
**in that** the clutch (A), which in the stationary disengagement mode has the fixed inner disk carrier and the rotating outer disk carrier, is provided with a splash lubrication pot (5) arranged coaxially in relation to the hollow shaft inside the inner disk carrier and firmly linked to a permanently rotating component (7) of the clutch (A), with the cylindrical outer wall of the splash lubrication pot (5) being provided with holes (6) through which the cooling oil, formed into a rotating oil column by the rotating splash lubrication pot (5), is sprayed against the disk package to cool it in spite of the fixed inner disk carrier.

2. A multi-ratio automatic transmission according to claim 1, **characterized**
**in that** the permanently rotating component of the clutch (A) is the clutch baffle plate (7).

## Revendications

1. Transmission automatique étagée pour véhicules automobiles comprenant une pluralité d'embrayages et de freins, au moins une partie des embrayages étant constituée d'embrayages à disques travaillant dans un liquide, qui comprennent des supports de disques intérieurs et extérieurs qui sont pourvus chacun d'un jeu de disques dans lequel le jeu de disques d'un support de disques intérieur forme un embrayage ou un frein avec un jeu de disques correspondant du support de disques extérieur et dans lequel, en général, les supports de disques intérieurs tournent et les supports de disques extérieurs sont fixes, tandis que, dans un certain état de fonctionnement, un support de disques intérieur d'un embrayage est fixe et le support de disques extérieur correspondant tourne, **caractérisée en ce qu'**à l'embrayage (A) qui comporte le support de disques intérieur fixe et le support de disques extérieur tournant dans l'état de fonctionnement de la désolidarisation à l'arrêt, est associée une cloche centrifuge (5) qui est disposée, coaxialement à l'arbre creux, dans l'espace entouré par le support de disques intérieur, et qui est reliée rigidement à l'élément (7) de l'embrayage (A) qui tourne en permanence, et **en ce que** la paroi extérieure cylindrique de la cloche centrifuge (5) est pourvue d'alésages (6) à travers lesquels l'huile de refroidissement, qui est transformée en une colonne d'huile tournante par la rotation de la cloche centrifuge (5), est projetée contre le paquet de disques pour refroidir ce dernier en dépit du fait que le support de disques intérieur est immobile.

2. Transmission automatique étagée selon la revendication 1, **caractérisée en ce que** la partie de l'embrayage (A) qui tourne en permanence est le régulateur d'admission d'air (7) de l'embrayage.
